(19) Europäisches Patentamt
European Patent Office
Office européen des brevets

(11) Veröffentlichungsnummer: **0 571 664 A1**

(12) **EUROPÄISCHE PATENTANMELDUNG**

(21) Anmeldenummer: **92121975.4**

(22) Anmeldetag: **24.12.92**

(51) Int. Cl.5: **B01D 53/34**, B01D 53/36

(30) Priorität: **29.05.92 DE 4217738**

(43) Veröffentlichungstag der Anmeldung:
**01.12.93 Patentblatt 93/48**

(84) Benannte Vertragsstaaten:
**AT DE DK ES GB IT NL**

(71) Anmelder: **HÜLS AKTIENGESELLSCHAFT**

**D-45764 Marl(DE)**

(72) Erfinder: **Jung, Jürgen, Dr.**
**Händelstrasse 113**
**W-4270 Dorsten(DE)**

(54) **Verfahren zur Minderung der Schwefeltrioxidbildung in Rauchgasen von Verbrennungsanlagen.**

(57) Die Erfindung betrifft ein Verfahren zur Minderung der Schwefeltrioxidbildung in Rauchgasen von Verbrennungsanlagen, wobei Ammoniak und/oder Alkohol dem Rauchgas im Bereich des Dampferzeugers zugesetzt werden.

EP 0 571 664 A1

Rank Xerox (UK) Business Services
(3.10/3.6/3.3.1)

Die Erfindung betrifft ein Verfahren zur Minderung der Schwefeltrioxidbildung in Rauchgasen von Verbrennungsanlagen.

Bei Verbrennungsverfahren allgemein sowie insbesondere bei der Verbrennung von fossilen Energieträgern werden in verstärktem Maße Verfahren zur Emissionsminderung angewendet. Neben den Stickstoffoxid- und Staubemissionen gibt es ein weiteres Problem, das insbesondere bei Schwerölfeuerungen zu beobachten ist, nämlich der Auswurf saurer Rauchgasbestandteile. Diese sauren Rauchgasbestandteile bestehen u. a. aus Schwefeltrioxid, an Flugasche bzw. -koks adsorbierter Schwefelsäure und begleitend aus schwefelsauren Korrosionsprodukten von den Heizflächen der Feuerungsanlage.

Eine Verringerung dieser sauren Partikelemissionen gelingt durch die Minderung der Schwefeltrioxidbildung im Kessel. Zum Beispiel ist eine Möglichkeit zur Minderung der Schwefeltrioxidbildung im Kessel in der Zeitschrift "Brennstoff-Wärme-Kraft" (BWK), Bd. 41 (1989), Nr. 11, S. 483-487, beschrieben. Danach wird durch Aufbereitung des Brennstoffes, wie z. B. Schweröl, mit neutralisierenden und verbrennungsfördernden Additiven die Schwefeltrioxidbildung gemindert. Die neutralisierenden Additive, bei denen es sich um organische oder anorganische Magnesium- oder Calciumverbindungen handelt, können direkt dem Öl zugemischt werden. Sie können pulverförmig in die Flammenfront oder ins Rauchgas eingedüst werden.

Die Wirkungsweisen dieser Additive bestehen in der Umwandlung der niedrigschmelzenden Ölaschebestandteile in höherschmelzende Verbindungen, in der Zerstörung der für die $SO_2/SO_3$-Konversion notwendigen Katalysatoren, wie $V_2O_5$, Bildung eines dünnen Magnesiumoxid-Überzuges auf den Heizflächen und in der Neutralisation von Schwefeltrioxid. Die Nachteile dieses Verfahrens ergeben sich zum einen durch die unterschiedlichen Dosiermethoden und zum anderen in den relativ langen Zeiten, die benötigt werden, bis der erste Minderungseffekt zu erkennen ist. Auch müssen bei der pulverförmigen Eindüsung dieser Additive in die Flamme oder ins Rauchgas deutlich überstöchiometrische Mengen zugegeben werden, da die Durchmischung mit dem Rauchgas unvollständig ist. Es entstehen zusätzlich zur Flugasche staubförmige Emissionen an Umsetzungsprodukten. Bei der Dosierung von Metalldispersionen ins Öl treten Probleme durch Verstopfung der Ölfilter und durch Düsenverschleiß auf.

Der zur Verringerung der Schwefeltrioxidbildung notwendige Aufbau neuer magnesiumhaltiger Heizflächenbeläge benötigt in der Regel eine relativ lange Zeit. Das Warten auf einen meßbaren Effekt bei gleichzeitig hohem Additivverbrauch macht dieses Verfahren unwirtschaftlich und unakzeptabel.

Der vorliegenden Erfindung liegt die Aufgabe zugrunde, die Schwefeltrioxidbildung in Rauchgasen von Verbrennungsanlagen zu mindern.

Es wurde nun überraschenderweise gefunden, daß die Schwefeltrioxidbildung in Rauchgasen von Verbrennungsanlagen drastisch vermindert wird, wenn man dem Rauchgas im Bereich des Dampferzeugers Ammoniak und/oder Alkohol zusetzt.

Gegenstand der vorliegenden Erfindung ist daher ein Verfahren zur Minderung der Schwefeltrioxidbildung in Rauchgasen von Verbrennungsanlagen, das dadurch gekennzeichnet ist, daß Ammoniak und/oder Alkohol dem Rauchgas im Bereich des Dampferzeugers zugesetzt werden.

Das erfindungsgemäße Verfahren eignet sich besonders gut zur Minderung der Schwefeltrioxidbildung in Rauchgasen von Kraftwerken, insbesondere von ölbefeuerten Kraftwerken.

Der Zusatz von Ammoniak und/oder Alkohol, die reduzierend wirken, verhindert die Oxidation des Schwefeldioxids zum Schwefeltrioxid im Dampferzeuger. Bei der Verbrennung von reinem Schwefel, Schwefelwasserstoff, schwefelhaltigen Brennstoffen sowie beim Rösten sulfidischer Erze findet man als Oxidationsprodukt stets Schwefeldioxid und weniger Schwefeltrioxid, d. h. die durch eine Direktoxidation von schwefelhaltigen Brennstoffen entstandenen Mengen an Schwefeltrioxid sind im Vergleich zum gebildeten Schwefeldioxid vernachlässigbar klein. Erst durch die Oxidation des Schwefeldioxids an den katalytisch wirkenden Heizflächenbelägen des Dampferzeugers entsteht die Hauptmenge des im Dampferzeuger gebildeten Schwefeltrioxids.

Das höchste $SO_2$-Oxidationspotential liegt dort vor, wo das Rauchgas am längsten mit dem Heizflächenbelag in Berührung kommt, d. h. wo die Heizflächenbelastung des Dampferzeugers - das ist das Verhältnis von Rauchgasvolumenstrom in $[m^3/h]$ i. N. (i. N. = in Normalbedingungen: T = 273 K und p = 1 013 mbar) zur Heizfläche in $[m^2]$ des Dampferzeugers - am größten ist und wo der Heizflächenbelag aufgrund seiner Porosität und Oberfläche die beste katalytische Eigenschaft besitzt.

Für das erfindungsgemäße Verfahren ist eine Heizflächenbelastung des Dampferzeugers, die zwischen 1 [m/h] bis 10 000 [m/h] liegt, geeignet.

Unterhalb von 700 °C hat der Heizflächenbelag aufgrund seiner großen Porosität und Oberfläche die beste katalytische Eigenschaft.

Vorzugsweise werden Ammoniak und/oder Alkohol dem Rauchgas bei Rauchgastemperaturen von 300 bis 700 °C zugesetzt, also im Bereich des Economizers (ECO), der auch Speisewasservorwärmer genannt wird. Im Bereich des ECO liegen die größten Heizflächen vor, die staubförmige Beläge mit einer hinreichend hohen Porosität besitzen.

Ammoniak und/oder Alkohol, welche in das Rauchgas im Bereich des Dampferzeugers eingedüst werden, lagern sich unter Adsorption auf dem Heizflächenbelag ab und verhindern so die Oxidation des Schwefeldioxids auf dem Heizflächenbelag. Der katalytisch wirkende Heizflächenbelag benötigt nur wenig Ammoniak und/oder Alkohol zur Inhibierung der $SO_2$-Oxidation, so daß der Überschuß an Ammoniak und/oder Alkohol entweder am Staub abreagiert oder bis zum nachgeschalteten DeNOx-Reaktor (Reaktor zur Entfernung der Stickstoffoxide aus dem Rauchgas) gelangen kann. Die Gegenwart von Stickstoffoxiden beeinflußt die Wirkung des Ammoniaks und/oder Alkohols nicht.

Die Heizflächenbeläge des Dampferzeugers enthalten neben Vanadiumoxid Metalloxide des Nickels, Eisens, Siliziums, Kalziums, Aluminiums, Natriums, Magnesiums, Kaliums, Molybdäns, Strontiums, Zinks, Titans, Bariums, Kobalts, Mangans, Bleis, Yttriums, Galliums und Phosphors. Diese Metalloxide für sich oder in Mischungen miteinander können als Katalysatoren für die Oxidation von $SO_2$ zu $SO_3$ wirken.

Die Zugabe von Ammoniak zum Rauchgas erfolgt gemäß dem Stand der Technik, z. B. gemäß der Lehre der DE-AS 24 58 888. Bevorzugt werden dem Rauchgas pro Mol Schwefeldioxid 0,01 bis 10 Mole Ammoniak und/oder Alkohol zugesetzt, besonders bevorzugt pro Mol Schwefeldioxid 0,1 bis 1 Mol Ammoniak und/oder Alkohol.

Alkohol und Ammoniak können sowohl getrennt wie auch zusammen dem Rauchgas zugegeben werden. Es ist vorteilhaft, wenn der Alkohol zusammen mit dem Ammoniak dem Rauchgas zugegeben wird. Dieses kann sowohl in Form einer wäßrigen Lösung von Alkohol und Ammoniak, als auch über die Gasphase durch Verdampfen von flüssigem Ammoniak, der einen Alkohol enthält, geschehen. Durch letztere Maßnahme wird eine besonders einfache und betriebssichere Handhabung der Dosierung ermöglicht.

Vorzugsweise wird dem Rauchgas ein Alkohol mit 1 bis 10 C-Atomen zugesetzt.

Vorteilhaft kann ein aliphatischer, cycloaliphatischer und/oder aromatischer Alkohol dem Rauchgas zugesetzt werden.

Neben einwertigen Alkoholen sind auch mehrwertige Alkohole wirksam. Darüber hinaus können primäre, sekundäre und tertiäre Alkohole eingesetzt werden.

Besonders bevorzugt wird dem Rauchgas Butanol zugesetzt.

Bei Kraftwerken unterscheidet man je nach Brennstoff und nach Art der Ascheausschleusung zwischen Schmelzkammerfeuerungen bei flüssigem Ascheabzug und Trockenfeuerungen bei trockener Entaschung. Als Brennstoff können Braunkohle, Steinkohle, Gas und Öl verwendet werden. Die Schwefeltrioxidbildung im Dampferzeuger ist besonders groß bei ölgefeuerten Kraftwerken, da die Öle, insbesondere Schweröle, relativ große Vanadiumgehalte besitzen und dieses Vanadium über die Flugasche auf den Heizflächen des Dampferzeugers abgelagert wird.

Die Erfindung wird durch die folgenden Beispiele näher erläutert:

Staubproben von Heizflächenbelägen des Dampferzeugers eines schwerölgefeuerten Kraftwerkes werden in einer Laborapparatur auf ihre katalytischen Eigenschaften zur Schwefeltrioxidbildung hin untersucht.

Durch Zugabe von Ammoniak bzw. Alkohol zum Testgas konnte die katalytische Schwefeltrioxidbildung gemindert werden.

Beispiel 1

Das Testgas durchströmt einen Plattenreaktor, in dem vier in einem Mantel verschweißte Stahlbleche, die je eine Länge von 400 mm, eine Breite von 35 mm und eine Stärke von 2 mm aufweisen, in Abständen von jeweils 5 mm übereinander angeordnet sind (siehe Abbildung). Diese Stahlbleche werden mit einer Aufschlämmung aus staubförmigem Heizflächenbelag des Dampferzeugers beschichtet.

Die mit der Aufschlämmung aus staubförmigem Heizflächenbelag belegte Fläche der Stahlbleche beträgt 0,14 $m^2$ und die Anströmfläche des Plattenreaktors 0,00078 $m^2$. Nach der Trocknung und einer Kalzinierung der Aufschlämmung aus staubförmigem Heizflächenbelag bei einer Temperatur von 400 °C wird der so präparierte Plattenreaktor mit einem $SO_2$-haltigen Testgas in einem Umluftofen beaufschlagt. Die einzelnen Komponenten des Testgases, wie $O_2$, $NO_x$, $SO_2$, $NH_3$ und $N_2$ werden in einer Gasmischstrecke vor dem Plattenreaktor vermischt und vorgewärmt, und dann wird das Testgas durch den Plattenreaktor geleitet.

Die Zugabe von Alkohol und Wasserdampf erfolgt durch Sättigung eines Stickstoffstromes mit dem entsprechenden Alkohol und Wasser bei den entsprechenden Partialdrücken für die vorgegebenen Konzentrationen im Testgas.

Die Versuchsparameter sind nachfolgend zusammengestellt:

Gaszusammensetzung des Testgases vor dem Plattenreaktor:

| | |
|---|---|
| 1 700 Vol.-ppm., trocken | $SO_2$ |
| 500 Vol.-ppm., trocken | $NO_x$ |
| 1,7 Vol.-%, trocken | $O_2$ |
| 11,4 Vol.-% | $H_2O$ |
| Rest zu 100 Vol-% | $N_2$ |
| Volumenstrom des Testgases | 1,408 $m^3$/h i. N. |
| Heizflächenbelastung | 10 m/h |
| Temperatur des Testgases | 550 °C |

Das Testgas wird bei 550 °C durch den Plattenreaktor geleitet und das am Reaktorende austretende $SO_3$ ermittelt.

Hierbei wird die $SO_2/SO_3$-Konversionsrate nach der Kondensationsmethode gemäß VGB-Beschreibung, Blatt 4.5.2, Ausgabe 1/88, bestimmt. Die $SO_2/SO_3$-Konversionsrate berechnet sich wie folgt:

$$SO_2/SO_3\text{-Konversionsrate} = \frac{SO_3\text{-Ausgangskonz. [Vol.-ppm]}}{SO_2\text{-Eingangskonz. [Vol.-ppm.]}} \times 100$$

Die $SO_2/SO_3$-Konversionsrate beträgt 10,9 %.

Der Versuch wird mit einem Zusatz von 500 Vol.-ppm. trockenem $NH_3$ zum Testgas wiederholt.

Durch den Zusatz von 500 Vol.-ppm $NH_3$ zum Testgas wird die $SO_2/SO_3$-Konversionsrate bei 550 °C von 10,9 % (ohne $NH_3$) auf 2,4 % erniedrigt. Die Staubprobe entstammt dem Heizflächenbelag hinter dem ECO. (Die Temperatur des Rauchgases an dieser Stelle beträgt ca. 390 °C.)

Beispiel 2

Beispiel 1 wird wiederholt, wobei die Stahlbleche des Plattenreaktors mit einer Staubprobe des Heizflächenbelages aus dem Bereich zwischen den Zwischenüberhitzern 1 a und 1 b belegt werden. (Die Temperatur des Rauchgases an dieser Stelle beträgt ca. 700 °C.)

Die Versuchsanordnung und die Zusammensetzung des Testgases sind diegleichen wie in Beispiel 1.

Durch den Zusatz von 80 Vol.-ppm $NH_3$ zum Testgas wird die $SO_2/SO_3$-Konversionsrate bei 550 °C von ursprünglich 6,8 % (ohne $NH_3$) auf 4,2 % herabgesetzt.

Beispiel 3

Beispiel 1 wird wiederholt, wobei die Stahlbleche des Plattenreaktors mit einer Staubprobe vom Heizflächenbelag aus dem Bereich vor dem ECO (Die Temperatur des Rauchgases an dieser Stelle beträgt ca. 545 °C.) belegt werden. Die Versuchsanordnung und die Zusammensetzung des Testgases sind diegleichen wie in Beispiel 1.

Durch den Zusatz von 50 Vol.-ppm n-Butanol zum Testgas wird die $SO_2/SO_3$-Konversionsrate bei 500 °C von ursprünglich 5,4 % (ohne Alkoholzusatz) auf 3,5 % herabgesetzt.

Beispiel 4

Beispiel 1 wird wiederholt, wobei die Stahlbleche des Plattenreaktors mit einer Staubprobe vom Heizflächenbelag aus dem Bereich hinter dem ECO (Die Temperatur des Rauchgases an dieser Stelle beträgt ca. 390 °C.) belegt werden. Die Versuchsanordnung und die Zusammensetzung des Testgases sind diegleichen wie in Beispiel 1.

Durch den Zusatz von 120 Vol.-ppm Benzylalkohol zum Testgas wird die $SO_2/SO_3$-Konversionsrate bei 450 °C von ursprünglich 6,4 % (ohne Alkoholzusatz) auf 4,5 % herabgesetzt.

4

66

EP 0 571 664 A1

Beispiel 5

Beispiel 1 wird wiederholt, wobei die Stahlbleche des Plattenreaktors mit einer Staubprobe vom Heizflächenbelag aus dem Bereich zwischen den Zwischenüberhitzern 1 a und 1 b (Die Temperatur des Rauchgases an dieser Stelle beträgt ca. 700 °C, siehe Beispiel 2) belegt werden. Die Versuchsanordnung und die Zusammensetzung des Testgases sind diegleichen wie in Beispiel 1, nur die Heizflächenbelastung wird über den doppelten Volumenstrom des Testgases (= 2,82 $m^3$/h i.N.) auf 20 m/h eingestellt.
Durch den Zusatz von 250 Vol.-ppm. $NH_3$ zum Testgas wird die $SO_2$/$SO_3$-Konversionsrate bei 550 °C von ursprünglich 4,0 % (ohne Alkoholzusatz) auf 2,0 % herabgesetzt.

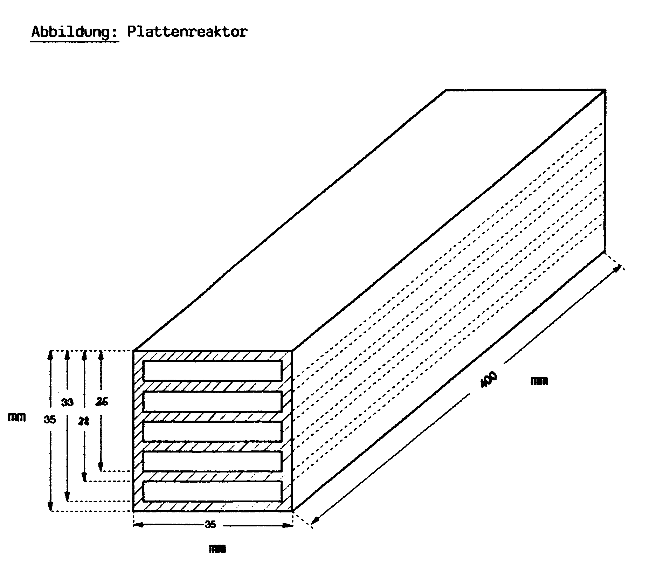

**Patentansprüche**

1. Verfahren zur Minderung der Schwefeltrioxidbildung in Rauchgasen von Verbrennungsanlagen,
dadurch gekennzeichnet,
daß Ammoniak und/oder Alkohol dem Rauchgas im Bereich des Dampferzeugers zugesetzt werden.

2. Verfahren nach Anspruch 1,
dadurch gekennzeichnet,
daß Ammoniak und/oder Alkohol dem Rauchgas bei Rauchgastemperaturen von 300 bis 700 °C zugesetzt werden.

3. Verfahren nach den Ansprüchen 1 und 2,
dadurch gekennzeichnet,
daß dem Rauchgas pro Mol Schwefeldioxid 0,01 bis 10 Mole Ammoniak und/oder Alkohol zugesetzt werden.

4. Verfahren nach Anspruch 3,
dadurch gekennzeichnet,
daß dem Rauchgas pro Mol Schwefeldioxid 0,1 bis 1 Mol Ammoniak und/oder Alkohol zugesetzt werden.

5. Verfahren nach den Ansprüchen 1 bis 4,
dadurch gekennzeichnet,
daß dem Rauchgas ein Alkohol mit 1 bis 10 C-Atomen zugesetzt wird.

6. Verfahren nach den Ansprüchen 1 bis 5,
dadurch gekennzeichnet,
daß dem Rauchgas ein aliphatischer, cycloaliphatischer und/oder aromatischer Alkohol zugesetzt wird.

7. Verfahren nach den Ansprüchen 5 und 6,
dadurch gekennzeichnet,
daß dem Rauchgas Butanol zugesetzt wird.

8. Verfahren nach den Ansprüchen 1 bis 7,
dadurch gekennzeichnet,
daß die Heizflächenbelastung des Dampferzeugers zwischen 1 [m/h] bis 10 000 [m/h] liegt.

9. Verfahren nach den Ansprüchen 1 bis 8,
dadurch gekennzeichnet,
daß die Verbrennungsanlagen Kraftwerke sind.

10. Verfahren nach Anspruch 9,
dadurch gekennzeichnet,
daß die Verbrennungsanlagen ölbefeuerte Kraftwerke sind.

5

Abbildung: Plattenreaktor

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| E,L | EP-A-0 534 087 (HÜLS AG) 31. März 1993 * das ganze Dokument * --- | 1-10 | B01D53/34 B01D53/36 |
| X | EP-A-0 191 918 (DIDIER-WERKE AG ET AL.) * Seite 3, Zeile 28 - Seite 4, Zeile 2; Anspruch 1 * --- | 1,2 | |
| X | DATABASE WPI Section Ch, Week 8044, Derwent Publications Ltd., London, GB; Class E36, AN 80-78095C & JP-A-55 121 826 (SAKAI CHEMICAL IND KK) 20. September 1980 * Zusammenfassung * --- | 1,2,9 | |
| X | WO-A-8 400 903 (LADEIRA ET AL.) * Seite 2, Zeile 10 - Seite 4, Zeile 25; Ansprüche 1-8 * --- | 1-4,9,10 | |
| A | EP-A-0 188 063 (W. R. GRACE & CO.) * Seite 7, Absatz 2 - Seite 8, Absatz 2; Ansprüche 1-12; Beispiel 2 * --- | 1-6,9,10 | RECHERCHIERTE SACHGEBIETE (Int. Cl.5 ) |
| A | DATABASE WPI Section Ch, Week 9210, Derwent Publications Ltd., London, GB; Class E36, AN 92-075690 & JP-A-4 018 913 (BABCOCK-HITACHI KK) 23. Januar 1992 * Zusammenfassung * --- | 1,5,6,9 | B01D |
| A | EP-A-0 313 115 (METALLGESELLSCHAFT AG)  * Spalte 1, Zeile 41 - Spalte 2, Zeile 55; Ansprüche 1-6 * ----- | 1,2,5-7, 9 | |

Der vorliegende Recherchenbericht wurde für alle Patentansprüche erstellt

| Recherchenort | Abschlußdatum der Recherche | Prüfer |
|---|---|---|
| DEN HAAG | 01 SEPTEMBER 1993 | EIJKENBOOM T. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..................................................................
& : Mitglied der gleichen Patentfamilie, übereinstimmendes
    Dokument

EPO FORM 1503 03.82 (P0403)